Europäisches Patentamt

European Patent Office

Office européen des brevets

(11) Numéro de publication: **0 361 581**
**A1**

## (12) DEMANDE DE BREVET EUROPEEN

(21) Numéro de dépôt: 89202314.4

(51) Int. Cl.5: **C02F 1/70**

(22) Date de dépôt: 14.09.89

(30) Priorité: 26.09.88 BE 8801094

(43) Date de publication de la demande:
04.04.90 Bulletin 90/14

(84) Etats contractants désignés:
**AT BE CH DE ES FR GB IT LI NL SE**

(71) Demandeur: **SOLVAY & Cie (Société Anonyme)**
**Rue du Prince Albert, 33**
**B-1050 Bruxelles(BE)**

(72) Inventeur: **Goubert, Martine**
**Avenue du Vignoble, 7**
**B-6521 Arquennes(BE)**
Inventeur: **Clerbois, Lucien**
**Avenue Sainte Anne, 130**
**B-1800 Vilvoorde(BE)**

(74) Mandataire: **Decamps, Alain René François et al**
**SOLVAY & Cie S.A. Département de la Propriété Industrielle Rue de Ransbeek, 310**
**B-1120 Bruxelles(BE)**

(54) **Procédé d'épuration d'effluents aqueux acides contenant des composés halogénés organiques.**

(57) Procédé d'épuration d'effluents liquides aqueux acides contenant des composés halogénés organiques selon lequel on fait réagir l'effluent avec un alliage de nickel avec un autre métal en poudre, comportant au moins deux phases cristallines, puis on filtre pour séparer l'alliage de l'effluent traité.

Le procédé s'applique à l'abattement de la teneur en composés halogénés organiques et de la demande chimique en oxygène des effluents liquides industriels tels que les effluents des ateliers de blanchiment des installations de production de pâte à papier ainsi que des effluents des installations d'oxychloration d'hydrocarbures.

EP 0 361 581 A1

EP 0 361 581 A1

**Procédé d'épuration d'effluents aqueux acides contenant des composés halogénés organiques**

La présente invention concerne un procédé d'épuration d'effluents aqueux acides contenant des composés halogénés organiques.

On connaît un procédé pour la déshalogénation de composés halogénés aromatiques et $\alpha$-arylaliphatiques consistant à faire réagir l'halogénure organique avec un sel d'hypophosphite en présence d'une quantité catalytique d'un métal noble (brevet US-4,618,686).

Les résultats obtenus sont cependant décevants lorsque la solution à traiter est acide et contient un grand nombre de composés organiques halogénés différents comme c'est par exemple le cas des effluents des ateliers de blanchiment des unités de production de pâtes à papier. Par ailleurs, ce procédé connu ne permet généralement pas de réduire substantiellement le caractère réducteur des effluents traités, que l'on mesure par la détermination de la demande chimique en oxygene (DCO). Ce procédé connu présente aussi le désavantage de consommer des quantités importantes d'un réactif coûteux en l'occurrence le sel d'hypophosphite.

L'invention a pour objectif de fournir un procédé qui permette l'élimination efficace des composés organiques halogénés et la réduction simultanée de la DCO et qui ne consomme pas de quantités importantes d'alcali.

A cet effet, l'invention concerne un procédé d'épuration d'un effluent aqueux acide contenant des composés halogénés organiques selon lequel on fait réagir l'effluent avec une poudre métallique sélectionnée parmi les poudres comprenant un alliage de nickel comportant au moins deux phases cristallines, puis on filtre la suspension résultante pour recueillir l'alliage résiduaire.

Dans le procédé selon l'invention, l'alliage de nickel doit généralement comprendre au moins 20 % en poids de nickel. Il peut être un alliage bimétallique ou comprendre plus de deux métaux différents.

Selon l'invention, l'alliage de nickel comporte au moins deux phases cristallines distinctes. La nature des deux phases cristallines dépend de la composition de l'alliage et est donnée par le diagramme des phases pour un alliage dont chacune des phases est en équilibre thermodynamique avec les autres.

Dans une forme d'exécution préférée du procédé selon l'invention, on sélectionne l'alliage de nickel parmi les alliages de nickel et d'aluminium. Des alliages recommandés sont ceux contenant entre 40 et 60 % en poids de nickel et entre 60 et 40 % en poids d'aluminium. Les alliages contenant entre 45 et 55 % en poids de nickel et entre 55 et 45 % en poids d'aluminium sont particulièrement préférés. De bons résultats ont été obtenus avec un alliage contenant 50 % en poids de nickel et 50 % en poids d'aluminium.

Dans le cas d'un alliage comportant entre 45 et 55 % en poids de nickel et entre 55 et 45 % en poids d'aluminium, qui est l'alliage préféré, les phases en équilibre thermodynamique sont au nombre de deux et sont appelées $\beta$ et $\gamma$ sur le diagramme des phases. Ces phases correspondent au composé chimique $NiAl_3$ pour la phase $\beta$ et au composé $Ni_2Al_3$ pour la phase $\gamma$. En pratique, cet alliage est obtenu par refroidissement lent d'un mélange de nickel et d'aluminium à l'état fondu. La vitesse de refroidissement de ce mélange fondu n'étant cependant pas infiniment lente, le système constitué du mélange à l'état fondu et des cristaux d'alliage appartenant aux différentes phases telles qu'elles figurent sur le diagramme des phases n'est pas rigoureusement à l'équilibre thermodynamique. Ce léger écart à l'équilibre peut se traduire dans l'alliage obtenu après refroidissement total du mélange fondu, par la présence d'une petite quantité d'une troisième phase cristalline dont la teneur n'excède pas, en général, 6 % en poids. Dans le cas d'un alliage comportant entre 45 et 55 % en poids de nickel et entre 55 et 45 % en poids d'aluminium, la troisième phase cristalline est la phase $\alpha$ constituée d'aluminium pur. La teneur de cette phase $\alpha$ dans l'alliage mis en oeuvre dans le procédé selon l'invention n'excède pas 6 % en poids.

Dans une autre forme d'exécution du procédé selon l'invention, on sélectionne l'alliage de nickel parmi les alliages de nickel et de magnésium qui contiennent entre 80 et 85 % en poids de nickel et entre 20 et 15 % en poids de magnésium. Le cas échéant, les phases en équilibre thermodynamique sont au nombre de deux et sont appelées $\alpha$ et $\beta$ sur le diagramme des phases. Ces phases correspondent au composé chimique Ni pur pour la phase $\alpha$ et au composé $Ni_2Mg$ pour la phase $\beta$.

Selon l'invention, l'alliage de nickel est mis en oeuvre à l'état de poudre. La granulométrie de cette poudre doit être telle que le diamètre moyen des particules soit suffisamment petit pour assurer une surface de contact entre l'alliage et l'effluent, propre à permettre une productivité non négligeable et suffisamment grande pour que chaque particule de l'alliage comporte elle-même en son sein au moins deux phases cristallines. En pratique le diamètre moyen de particule de la poudre d'alliage se situe généralement dans la zone comprise entre 0,005 et 0,150 mm. On préfère mettre en oeuvre des poudres d'alliage qui ont un diamètre moyen de particules compris entre 0,010 et 0,100 mm.

La quantité d'alliage de nickel mise en oeuvre dépend de la teneur de l'effluent en composés

2

halogénés organiques. Elle est habituellement sélectionnée dans la gamme couvrant la zone de 30 à 500 g d'alliage par litre d'effluent.

Conformément à l'invention, les effluents traités avec la poudre d'alliage de nickel doivent être acides. Avantageusement, on sélectionne un pH de début de réaction appartenant à la zone comprise entre 1,5 et 6,5. De préférence, on choisit un pH compris entre 2,0 et 6,0. Lorsque la solution d'effluent à traiter a un pH naturel compris dans les zones précitées, il n'est habituellement pas fait d'addition d'alcali ni d'acide à l'effluent avant sa mise en contact avec la poudre d'alliage de nickel, ce qui représente un avantage non négligeable sur le plan de l'économie des réactifs et de l'économie de manipulations.

La réaction de l'effluent avec la poudre de l'alliage peut être opérée dans des conditions de température, de pression et de durée variées. Ces conditions ne sont pas critiques et peuvent être déterminées dans chaque cas d'espèce par une expérimentation de routine en laboratoire, à la portée du technicien. Cependant, on préfère généralement travailler à pression atmosphérique pour des raisons d'économie évidentes et à une température comprise entre l'ambiance et 90°C. La durée de la réaction est généralement comprise entre 5 et 90 minutes.

La mise en contact de la poudre d'alliage de nickel et de l'effluent dans le procédé selon l'invention se fait indifféremment en continu ou en discontinu. Elle se réalise aisément en maintenant la poudre d'alliage de nickel en suspension dans la masse liquide de l'effluent à l'aide d'une agitation modérée obtenue via tout moyen d'agitation par ailleurs bien connu en soi dans le domaine des opérations unitaires du génie chimique. Avantageusement, elle se réalise au moyen d'un réacteur discontinu équipé d'un arbre muni d'un agitateur à pales tournantes. Des vitesses de rotation de l'agitateur comprise entre 500 et 2000 tours par minute conviennent généralement bien.

Le traitement de l'effluent selon le procédé de l'invention peut se faire indifféremment sous une atmosphère d'air ou d'azote.

Dans une variante du procédé selon l'invention, on peut faire suivre le traitement de l'effluent avec l'alliage de nickel par une opération de neutralisation et de filtration du précipité éventuellement formé dans le but de parfaire la décoloration de l'effluent traité.

A l'issue de la réaction de l'effluent avec la poudre d'alliage, on soumet la suspension aqueuse résultante à une filtration pour recueillir séparément l'effluent épuré et la poudre d'alliage.

L'invention présente l'avantage de fournir un procédé particulièrement efficace et peu coûteux permettant d'abattre, simultanément, la teneur en composés halogénés organiques et la demande chimique en oxygène des effluents.

L'invention s'applique indifféremment au traitement des composés halogénés organiques dans les effluents faiblement, moyennement ou fortement acides. Elle convient particulièrement bien pour traiter des effluents aqueux qui se présentent naturellement avec un pH qui se situe dans la gamme comprise entre 1 et 6.

Des exemples de tels effluents sont les rejets liquides des ateliers de blanchiment de pâtes à papier qui contiennent des composés solubles constitués de lignines chlorées ainsi que les effluents liquides provenant de réacteurs industriels où l'on effectue des réactions impliquant des composés organiques et des halogènes, en particulier les réacteurs d'oxyhalogénation des hydrocarbures, et, tout particulièrement, les réacteurs d'oxychloration.

Les polluants contenus dans ces effluents sont des composés organiques halogénés appartenant à la famille des composés aliphatiques ou aromatiques, éventuellement substitués par des groupes aldéhyde ou alcool tels que les halogénures de méthylène, les haloformes, les tétrahalogénures de carbone, les trihaloéthylènes, les perhaloéthylènes, les hexahalobutanes, les hexahalobenzènes, les dihalopropanes, les dihaloéthanes, les trihaloacétaldéhydes, les haloéthanols, les dihalométhanes, les dihalophénols et les trihalophénols, les haloguaiacols, les halovanillines et les alcools dihalobenzyliques.

Les exemples qui suivent ont pour but d'illustrer l'invention, sans en limiter sa portée.

Exemples 1 à 5 (conformes à l'invention) et 6R (de référence) :

On a immergé un réacteur fermé d'un volume de 850 ml dans un bain thermostatisé à la température de 50°C et on l'a soumis à un dégazage par balayage avec un courant d'azote pendant 5 minutes.

On a ensuite introduit dans le réacteur 300 ml d'effluent aqueux acide provenant d'un atelier de blanchiment de pâte à papier chimique au bisulfite de Mg selon la séquence CEHH bien connue dans l'industrie de la cellulose. On a soumis cet effluent à agitation au moyen d'un agitateur métallique tournant à 1350 tours par minute.

Après barbotage au moyen d'un courant d'azote pendant 10 minutes, on a ajouté à l'effluent une quantité déterminée de poudre d'un alliage de nickel et d'aluminium comportant 50 % en poids de nickel et 50 % en poids d'aluminium et constitué de 43 % en poids de phase cristalline $\beta$ et 57 % en poids de phase cristalline $\gamma$ (exemples 1 à 5). Le diamètre moyen des particules de la poudre d'alliage était de 19 μm. Dans le cas de l'exemple 6R, on a mis en oeuvre un mélange de 125 g/l de poudre de Ni de diamètre moyen de 17,4 μm et de 125 g/l de poudre de Al de diamètre moyen de 58,9 μm.

On a ensuite laissé réagir sous agitation pendant 60 minutes, puis on a filtré à chaud l'effluent pour séparer l'alliage ou le métal qui n'avait pas réagi.

Le filtrat a ensuite été analysé pour déterminer la DCO selon la norme ASTM D 1252-83 ainsi que la teneur en composés organiques halogénés adsorbables (encore appelée AOX : "Adsorbable Organic Halogens") selon la norme DIN 38409.

On a porté au tableau I qui suit les résultats obtenus pour des quantités variables d'alliage ou de métal.

| Exemple N° | Quantité d'alliage ou de métal, g/l | DCO, mg/l | AOX, mg/l |
|---|---|---|---|
| 0 | 0 | 1382 | 157 |
| 1 | 100 | 900 | 69 |
| 2 | 200 | 810 | 51 |
| 3 | 300 | 530 | 30 |
| 4 | 400 | 560 | 26 |
| 5 | 500 | 500 | 17 |
| 6R | 250 | 949 | 83 |

Exemple 7 (selon l'invention)

On a procédé de manière identique à celle utilisée pour les exemples 1 à 6R excepté que l'on a mis en oeuvre à titre de métal, 500 g/l d'une poudre d'un alliage de nickel et de magnésium comprenant en poids, 82,5 % de Ni, 15,0 % de Mg, 2,0 % de C, 0,2 % de Si, 0,2 % de Fe et 0,07 % de Co de diamètre moyen des grains de 34,5 μm.

Les mesures de DCO et d'AOX effectuée après traitement sur le même effluent ont donné, respectivement 555 mg/l et 25,3 mg/l.

**Revendications**

1 - Procédé d'épuration d'un effluent aqueux acide contenant des composés halogénés organiques, selon lequel on fait réagir l'effluent avec une poudre métallique puis on filtre la suspension résultante pour recueillir l'alliage résiduaire, caractérisé en ce qu'on sélectionne une poudre comprenant un alliage de nickel comportant au moins deux phases cristallines.

2 - Procédé selon la revendication 1, caractérisé en ce que l'alliage est un alliage de nickel et d'aluminium qui contient entre 45 et 55 % en poids de nickel et entre 55 à 45 % en poids d'aluminium.

3 - Procédé selon la revendication 2, caractérisé en ce que l'alliage de nickel et d'aluminium contient 50 % de nickel et 50 % d'aluminium.

4 - Procédé selon la revendication 2 ou 3, caractérisé en ce que l'alliage de nickel et d'aluminium comporte les phases $\beta$ et $\gamma$ de composition chimique respective NiAl3 et Ni2Al3.

5 - Procédé selon la revendication 4, caractérisé en ce que l'alliage de nickel et d'aluminium comporte également une proportion mineure de phase $\alpha$ formée d'aluminium pur.

6 - Procédé selon l'une quelconque des revendications 2 à 5, caractérisé en ce que la poudre d'alliage de nickel et d'aluminium présente un diamètre moyen de particule compris entre 0,010 et 0,100 mm.

7 - Procédé selon la revendication 1, caractérisé en ce que l'alliage est un alliage de nickel et de magnésium qui contient entre 80 et 85 % en poids de nickel et entre 20 à 15 % en poids de magnésium.

8 - Procédé selon la revendication 7, caractérisé en ce que l'alliage de nickel et de magnésium comporte les phases $\alpha$ et $\beta$ de composition chimique respective Ni pur et Ni2Mg.

9 - Procédé selon la revendication 1, caractérisé en ce que l'on met en oeuvre une quantité d'alliage de nickel comprise entre 30 et 500 g d'alliage par litre d'effluent.

10 - Procédé selon l'une quelconque des revendications 1 à 9, caractérisé en ce que le pH de l'effluent en début de réaction est compris entre 1,5 et 6,5 et de préférence entre 2,0 et 6,0.

11 - Procédé selon l'une quelconque des revendications 1 à 10, caractérisé en ce qu'on opère la réaction à pression atmosphérique, à une température comprise entre la température ambiante et 90°C et pendant une durée comprise entre 5 et 90 minutes.

Office européen
des brevets

**RAPPORT DE RECHERCHE EUROPEENNE**

Numero de la demande

EP  89 20 2314

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 012 162 (INCON ANLAGENTECHNIK GmbH) <br> * Page 5, ligne 34 - page 6, ligne 17; page 9, ligne 38 - page 10, ligne 31; revendications 1,11-13 * | 1,6 | C 02 F   1/70 |
| A | | 2,7,10 | |
| | --- | | |
| Y | CHEMICAL ABSTRACTS, vol. 103, no. 20, 18 novembre 1985, pages 330-331, abrégé no. 165596g, Columbus, Ohio, US; & JP-A-60 71 086 (KANKYO TECH. K.K.) 22.04.1985 <br> * Abrégé * | 1,6 | |
| | ----- | | |

| | DOMAINES TECHNIQUES RECHERCHES (Int. Cl.5) |
|---|---|
| | C 02 F |

Le présent rapport a été établi pour toutes les revendications

| Lieu de la recherche | Date d'achèvement de la recherche | Examinateur |
|---|---|---|
| LA HAYE | 08-12-1989 | GONZALEZ Y ARIAS M.L. |